(19) Europäisches Patentamt
European Patent Office
Office européen des brevets

(11) **EP 2 136 226 A1**

(12) **EUROPEAN PATENT APPLICATION**

(43) Date of publication:
**23.12.2009 Bulletin 2009/52**

(51) Int Cl.:
**G02B 6/00** *(2006.01)*     **G02B 3/00** *(2006.01)*
**G02B 5/02** *(2006.01)*     **G02F 1/13357** *(2006.01)*
**F21V 8/00** *(2006.01)*

(21) Application number: **09155175.4**

(22) Date of filing: **13.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **20.06.2008 US 214745**

(71) Applicant: SKC Haas Display Films Co., Ltd.
**Choongchungnamdo (KR)**

(72) Inventors:
• **Chari, Krishnan**
  **Fairport, NY 14450 (US)**
• **Lander, Charles W**
  **Wayland, NY 14572 (US)**
• **Anderson, Charles C**
  **Penfield, NY 14526 (US)**

(74) Representative: **Kent, Venetia Katherine**
**Patent Outsourcing Limited**
**1 King Street**
**Bakewell**
**Derbyshire DE 45 1DZ (GB)**

(54) **Light-redirecting article**

(57)     A method for forming a light-redirecting article is provided wherein a surface of a substrate is conditioned by applying a layer of an embedment material. A close-packed layer of microspheres is assembled using drying-assisted self-assembly and applied to the conditioned surface. Microspheres are then embedded halfway into the surface of the layer of the embedment material.

FIG. 4B

EP 2 136 226 A1

Description

## FIELD OF THE INVENTION

This invention generally relates to light-redirection articles and more particularly relates to a light-redirecting film formed as an array of hemispherical microlenses.

## BACKGROUND OF THE INVENTION

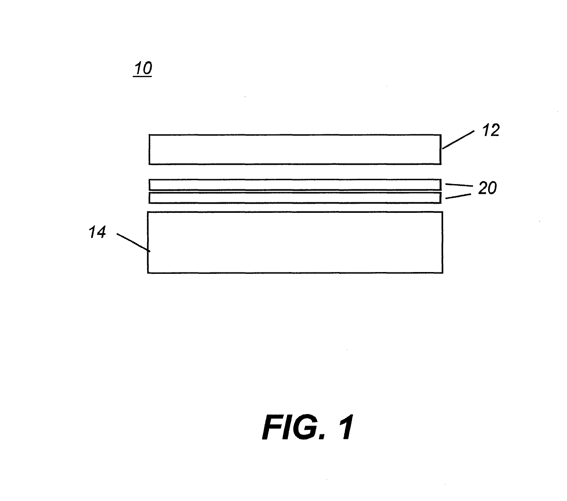

Transmissive Liquid Crystal Display (LCD) panels offer a compact, lightweight alternative to other types of displays, but require some type of backlight illumination to provide the light for modulation. Referring to the schematic block diagram of a display apparatus 10 in Figure 1, backlight illumination for an LCD panel 12 and similar display device is typically provided by one or more light redirection articles 20 that are positioned behind LCD panel 12, relative to the viewer, and that redirect light from one or more light sources 14 through LCD panel 12.

Inherent limitations of LCD technology make it desirable to obtain an efficient backlighting apparatus that directs as much light as possible through the LCD panel. In conventional practice, one or more diffusion films and prism films are placed between the light source and the LCD panel as light redirection articles 20 in order to obtain and redirect light efficiently. The drive for lower cost and thinner, lightweight displays places further demands on these light-redirecting films, so that even incremental improvements in performance are seen to be of particular value.

One strategy for increasing the efficiency of light-redirecting films is to optimize their geometry, forming surface structures whose shapes provide improved handling of the incident light. Various types of light-redirecting films use arrays of light-shaping microstructures, formed on one or both surfaces. Lenslet arrays, having closely packed microlenses of appropriate size and shape, are a solution of particular interest. Lenslet arrays can be formed into a single, thin sheet, can be fabricated relatively inexpensively, are readily adaptable in any orientation within a plane, and can provide a high degree of uniformity to the illumination.

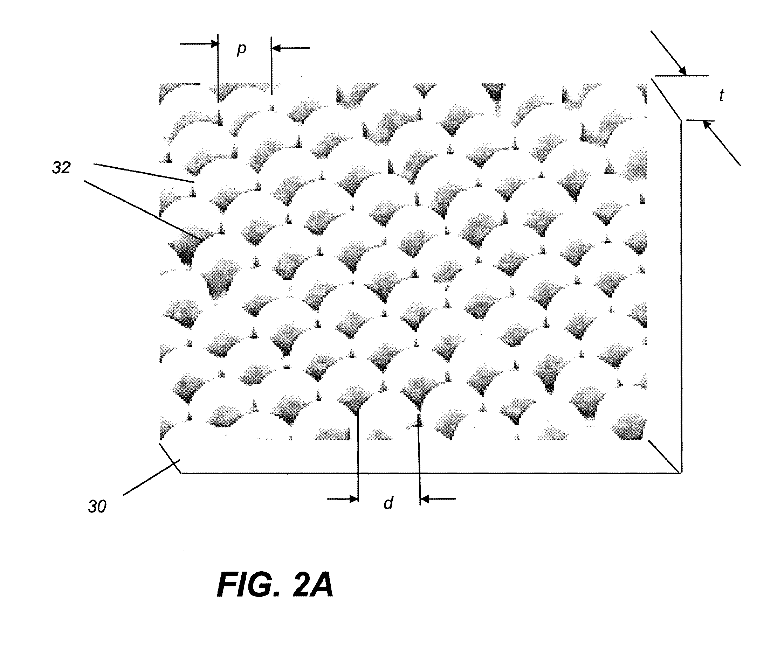

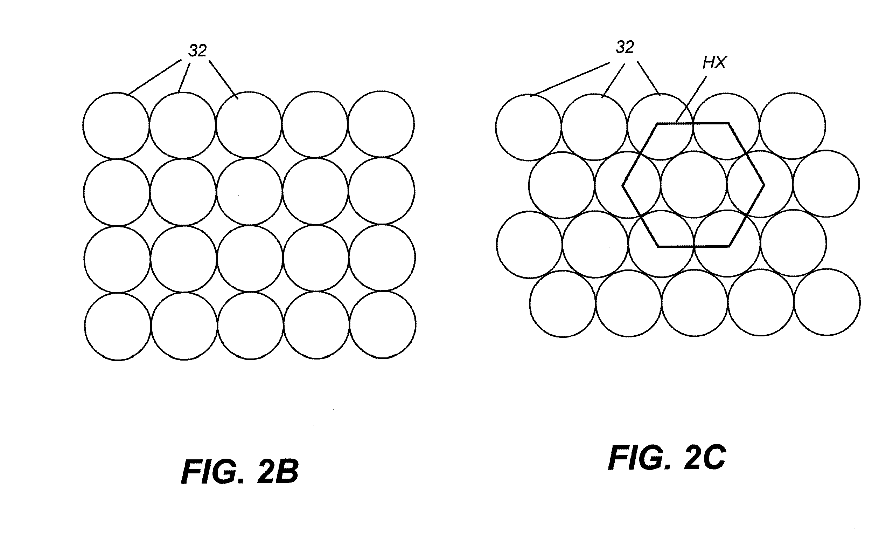

The perspective view of Figure 2A shows a portion of a light-redirecting film 30 that uses an array of lenslets 32 and shows some dimensional aspects that are related to performance and fabrication. Figure 2B shows a plan view of lenslets 32 arranged in conventional row-and-column manner; the lenslets 32 have orthogonal orientation directions. Figure 2C shows two-dimensional (2-D) hexagonal close-packing, an alternate packaging arrangement that improves fill factor, as described subsequently. There are a number of design considerations of particular interest for achieving good performance from a light-redirecting film using lenslet arrays, including the following:

(i) Lenslet dimensions and contour. The size and shape of each lenslet 32 in the array are factors in controlling performance of light-redirecting film 30. For diffuse LCD backlighting, lenslet 32 diameter d is chosen generally in the range from sub-micron values to about 20 microns or more. Because a hemispheric shape collimates light well, a shape as close as possible to a perfect hemisphere is particularly advantaged for light-handling.

(ii) Fill factor. The amount of light that can be obtained and directed through light-redirecting film 30 corresponds to its fill factor. Following well known geometric principles, the theoretical maximum fill factor for objects of equal circular diameter packed within a plane is obtained using a hexagonal close-packing (HCP) arrangement, as shown in Figure 2C (with hexagon HX represented having vertices at adjacent lenslet 32 centers) rather than an ordered row-and-column arrangement as shown in Figure 2B. The theoretical maximum fill factor can be computed as:

$$\frac{\pi}{2\sqrt{3}} \cong 0.907$$

That is, even where perfect hexagonal packing is achieved, there is still some minimum amount of gap in areas between adjacent lenslets.

(iii) Material. Light-redirecting film 30 can be made from any suitable transparent material that has an index of refraction that lies within an acceptable range. However, because of the increasing interest in more flexible displays, a polymer is generally advantaged over glass or other stiff substrate. Monolithic fabrication has particular advantages for minimizing unwanted stray light due to reflection or to defects at the interface.

(iv) Thickness. It would be particularly advantageous to have thickness t as thin as possible, particularly for use with portable and hand-held displays.

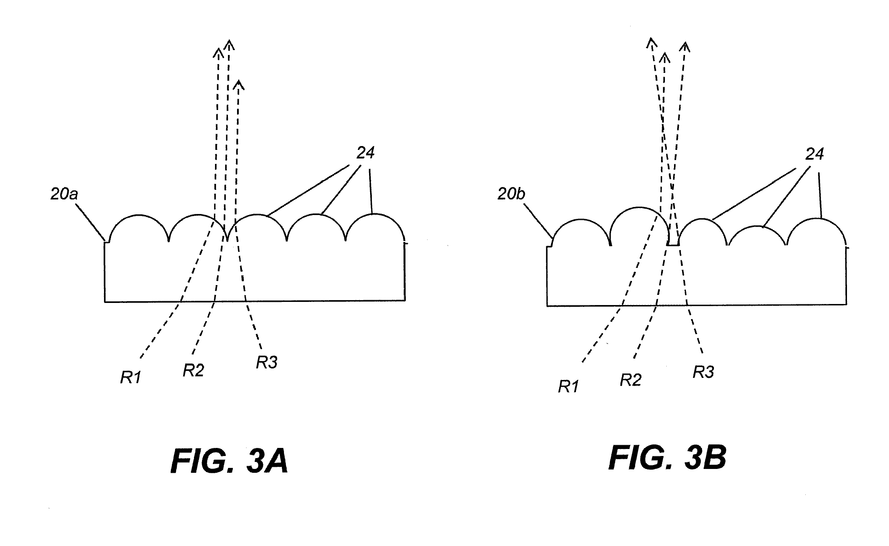

Because of the scale of the lenslet structures being formed and the difficulties related to fabrication of a close-packed array of such lenslets, there can be a considerable difference between the intended design of an ideal light-redirecting film 30 and its actual fabrication. By way of illustration, Figure 3A shows a cross-sectional schematic of a small sample of a light-redirection article 20a that has lenslets 24 that are closely packed and hemispherical. Rays R1, R2, and R3 indicate exemplary paths for incident light at various angles. With well-formed and closely packed hemispherical lenslets 24, relatively good collimation is achieved. By way of contrast, Figure 3B shows a cross-sectional schematic of a small sample of a light-redirection article 20b that is not well-formed. Here, a number of lenslets 24 are not hemispherical, so that their cross-section is not nearly semicircular, or may have a contour that exhibits high eccentricity, resembling an ellipsoidal rather than sperical shape. As exemplary rays R1, R2, and R3 show, good collimation is not achieved where these defects are widespread.

While the defects of the Figure 3B embodiment may be somewhat exaggerated for the sake of description, the problems shown in Figure 3B are representative of light-redirection articles, fabricated to date, that use arrays of closely-spaced lenslets. The disparity between design and execution in practice, as exemplified in the examples of Figure 3A and 3B, can clearly be seen in a survey of conventional fabrication approaches and their results.

For example, a number of approaches for fabrication of closely packed lenslet arrays have used tiny spherical beads applied to a substrate for forming a mold shape or template. This template can then be used as a negative for the molding process that forms the lenslet array onto a polymer substrate. In an article entitled "Close-Packed Hemispherical Microlens Array from Two-Dimensional Ordered Polymeric Microspheres" in Langmuir 2006 vol. 22, pp. 7358-7363, researchers Nam et al. describe a fabrication sequence that employs spin coating of a colloidal solution of polystyrene microspheres onto a plasma-treated glass substrate in order to arrange the microspheres in a close-packed distribution. The resulting array of beads is then used as a template for forming molds using polydimethylsiloxane (PDMS). The PDMS molds are then used for molding a UV-curable photopolymer which is bonded to a glass substrate. Authors Nam et al. claim to obtain a uniform microlens array with hexagonal close-packing (HCP).

Spin coating, as used by Nam et al., is a relatively costly method for applying beads to a substrate and it can be difficult to control results for HCP arrangement when using this method. Other methods for depositing microspheres onto a substrate surface also present some difficulties. Dip-coating, for example, can be very time-consuming and does not tend to achieve close-packing densities. Earlier methods used for glass bead deposition, used in the fabrication of retroreflective articles, execute a dip-coating sequence by passing a somewhat tacky substrate over a pool of glass beads for obtaining dense distribution on a surface. Such methods are relatively inefficient and are not well-suited to the task of obtaining a close-packed arrangement such as hexagonal close-packing provides.

Further problems with earlier approaches for forming microlens arrays relate to maintaining the shape or contour of lens structures. Even if a suitable and inexpensive close-packing method were found for depositing microbeads in close-packed fashion, it can be difficult to control the shapes of features in the microlens array that is formed using a template of spherical beads, such as Nam et al. describe. The resulting structures molded in such a process may not hold truly spherical surface contours but, instead, exhibit a high degree of eccentricity, so that the lenslet shapes would more accurately be described as ellipsoidal or otherwise aspherical. Using the Nam et al. method, for example, shapes of various curvature would be formed. Moreover, even where the formed lenslet structures exhibit low enough levels of eccentricity to be considered spherical, their exposed contour above the plane surface is not generally hemispherical, so that a cross-section, then, is not substantially semicircular. As a result of this divergence from true hemispherical shape, and as a result of variation in shape from one lenslet structure to the next, light directed into different individual lenslets may not be handled equally well, leading to reduction in potential efficiency or even to dark spots or other undesirable localized effects when used for a large scale light-redirection article.

Fill factor remains a problem that is not adequately addressed using conventional methods. Conventional dip-coating techniques tend to provide a close-packed hexagonal arrangement, typically yielding disappointing fill factors of less than about 70 percent.

Other approaches attempt to improve upon the fill factor limitations of hexagonal close packing by arranging a pattern of lenslet structures of different diameters along the surface of a light-redirecting film. These approaches include, for example, providing a hexagonal close-packed lenslet pattern and then disposing a tiny lenslet in the gap that lies between each cluster of larger hexagonally close-packed lens structures. Such methods, while they might offer some incremental fill factor improvement in theory, present considerable fabrication challenges in practice. Moreover, even if the use of tiny lenslets of different sizes on the same surface were feasible, the incremental improvement that might be achieved by such approaches is unlikely to justify the cost of fabrication.

Some research results have shown a measure of success in achieving close-packed arrangements of spheres over at least a portion of a substrate surface. However, it remains difficult to maintain close-packing over more than a small area. Even if it were achievable, however, perfectly ordered close packing could have undesirable aspects. Depending on spatial frequency, perfect regularity and consistent orientation in geometric patterning can lead to unwanted frequency "beat" effects due to the stacking of multiple patterned array components. Moire patterns, due to the existence of such beat frequencies can create unwanted visual effects in the displayed image, as is well known to those skilled in the digital imaging arts. Thus, it appears that some imperfection or irregularity in the close-packing arrangement and some large-scale dis-ordering in the packing orientation of close-packed sections would be beneficial, even at the loss of some small percentage of fill factor. This irregularity would effectively minimize the likelihood of image moire with the loss of only a very small percentage of light efficiency.

Conventional light-redirection films are often fabricated by bonding, to a substrate sheet, a layer having formed microlens structures. This is the arrangement shown, for example, in the Nam et al. article described earlier. While the Nam et al. approach overcomes some of the inherent difficulties in achieving the proper surface shapes and may be acceptable for some applications, however, there can be advantages to monolithic fabrication. Forming light-redirecting film as a single material can be particularly useful for smaller and more flexible displays, for example. However, monolithic fabrication of hemispheric lenslets can be difficult to obtain using conventional methods.

With the increasing number of display devices employing LCD panels and the need for enhanced efficiency, more compact packaging, reduced parts count, and lower cost, it can be appreciated that there is a need for improved light-redirecting films that support these display devices.

## SUMMARY OF THE INVENTION

The present invention provides a method for forming a light-redirecting article comprising: a) conditioning a surface of a substrate by applying a layer of an embedment material; b) assembling a close-packed layer of microspheres using drying-assisted self-assembly and applying the close-packed layer of microspheres to the conditioned surface; and c) embedding the microspheres halfway into the surface of the layer of embedment material.

In another aspect, the present invention provides a light-redirecting article comprising: a featured surface comprising a plurality of two-dimensional domains of hexagonally close-packed hemispherical lenslets, wherein the coefficient of variation for hemispherical lenslet diameters is less than about 0.35, wherein at least two adjacent domains have different close-packing orientation directions and wherein grain boundaries delineate interfaces between neighboring domains; and wherein, taken in cross section at an angle normal to the featured surface, the shape of more than half of the sectioned lenslets in any domain is substantially semicircular.

In another aspect, the present invention provides a display apparatus comprising:

a) a light source energizable for providing illumination over an area; b) a light-redirecting film in the path of the illumination for providing a conditioned illumination and comprising: a featured surface comprising a plurality of two-dimensional domains of hexagonally close-packed hemispherical lenslets, wherein the coefficient of variation for hemispherical lenslet diameters is less than about 0.35, wherein at least two adjacent domains have different close-packing orientation directions and wherein grain boundaries delineate interfaces between neighboring domains; and wherein, taken in cross section at an angle normal to the featured surface, the shape of more than half of the sectioned lenslets in any domain is substantially semicircular; and c) a display panel disposed to modulate the incident conditioned illumination from the light-redirecting film for forming an image.

## BRIEF DESCRIPTION OF THE DRAWINGS

Figure 1 is a side view showing components of a display apparatus using the light-redirecting film of the present invention.

Figure 2A is a perspective view showing a portion of a light-redirecting film and highlighting a number of dimensional parameters that affect fabrication and performance.

Figure 2B is a plan view of lenslets arranged in conventional row-and-column manner.

Figure 2C shows two-dimensional (2-D) hexagonal close-packing in an alternate packaging arrangement.

Figure 3A is a schematic cross-sectional view showing the light-handling behavior of a light-redirection article having perfectly hemispherical lenslets.

Figure 3B is a schematic cross-sectional view showing the light-handling behavior of a light-redirection article having some lenslets that are not hemispherical.

Figures 4A and 4B show the fabrication sequence for forming a light-redirecting film in one embodiment.

Figure 5 is a schematic diagram showing capillary attraction between adjacent microspheres during self-assembly.

Figures 6A, 6B, and 6C show plan views of early, intermediate, and later stages, respectively, in the progressive self-assembly process used for microspheres in embodiments of the present invention.

Figure 7 shows a top view of microsphere close-packing results in one embodiment.

Figure 8A shows perspective views of a template with embedded microspheres and a corresponding mold with cavities for forming lenslets in an exemplary fabrication sequence.

Figure 8B is a perspective view showing hemispheric lenslets of the light-redirecting film and indicating a cross-section taken at a normal to the film plane.

Figure 8C is a plan view showing the range of angles considered to constitute a semicircular cross-section for the hemispheric lenslets.

Figure 9 is a cross-sectional view showing light-redirecting film provided on a substrate.

Figure 10 is a schematic view of light-redirecting film fabrication using a carrier.

Figure 11 is a schematic view of light-redirecting film fabrication without use of a carrier.

Figure 12A is a schematic view of light-redirecting film fabrication using a patterned belt.

Figure 12B is a schematic of light-redirecting film fabrication using a donor material.

Figure 13 shows, in schematic form, a fabrication apparatus using UV curing for manufacture of a light-redirecting film.

Figure 14 is a plan view showing the diffraction pattern provided to a laser beam by a light-redirecting film of the present invention.

Figure 15A is a plan view of a light redirecting film of present invention, with a number of close-pached domains outlined.

Figure 15B is an enlarged plan view of a portion of the light-redirecting film of Figure 15A, showing additional surface features.

Figure 16 is a perspective view of a sectioned portion of a light-redirecting film showing hemispheric lenslets along its featured surface.

## DETAILED DESCRIPTION OF THE INVENTION

Embodiments of the light-redirecting article of the present invention that are described herein are directed primarily to fabrication of a light-redirecting film. As noted earlier in the Background section, attributes of reduced thickness and light weight, such as would be offered by a suitable film material, are particularly advantageous for light-redirecting articles used with portable and hand-held displays and other thin display devices. It should be noted, however, that embodiments of the present invention are directed to fabrication and structure of the featured surface of a light-redirecting article, whether that article is provided in the form of a single material or monolithic film or plate, or a composite film or other composite article wherein a substrate supports a film material that provides the featured surface.

In the context of the present disclosure, the term "microsphere" refers to a body of material that is substantially spherical. A microsphere can be, for example, a suitably small sphere of glass, polymer, or other suitable material having a diameter that is in the appropriate range for lenslets in an array of microlenses used in a light-redirecting film.

In the context of the present disclosure, the term "spherical" generally means having a shape whose cross-section has eccentricity less than about 0.2, preferably less than 0.1. In practice, eccentricity $e$ gives a relative measure of how much a conic section differs from a perfect circle (having eccentricity $e$ = 0.) The eccentricity e of an ellipse is defined as:

$$e = \sqrt{1 - \frac{b^2}{a^2}}$$

where $a$ is the length of the semi-major axis and $b$ is the length of the semi-minor axis.

As the term is used in the present disclosure, a 2-D shape is substantially a semicircle when it has an eccentricity of less than about 0.2 and when its shape is substantially an arc subtended by an angle that is greater than 160 degrees and less than about 200 degrees.

As used in the context of the present disclosure, the coefficient of variation (cv) has its standard meaning as a normalized measure of dispersion in a distribution. For a distribution of values, the cv is defined as the standard deviation of the distribution divided by the (non-zero) arithmetic mean for that distribution.

Hexagonal close-packing is familiar terminology to those skilled in the study of crystalline structures. In the context of the present disclosure, the term "two-dimensional hexagonal close-packing", referred to as 2-D HCP, relates to the maximum packing density that can be achieved for a single layer of spheres of identical radius on a planar surface, as described earlier with reference to Figure 2C.

Embodiments of the present invention are directed to fabrication of a light-redirecting article that provides a surface having an array of hexagonally close-packed (HCP) lenslets that are substantially hemispheric. Lenslet diameters can range from sub-micron sizes, such as 0.5 microns or less, to larger sizes in the range of 10-20 microns or more. As noted in the Background section given earlier, fabrication of lenslet structures that are both close-packed and hemispheric in shape has previously proved elusive using conventional fabrication techniques.

Fabrication of hemispheric lenslets arranged in an HCP array can be performed in a number of ways, using embodiments of the present invention. Methods of the present invention employ a combination of techniques for forming an array of micro-hemispheres together in an HCP arrangement that is particularly advantaged for its high fill-factor and for its favorable light-handling properties, while avoiding problems with moire or other frequency effects. Light-redirecting articles such as films that are formed using the various embodiments of the present invention can be provided in monolithic form as well as in the form of layers that can be bonded a substrate or to a carrier, as described subsequently.

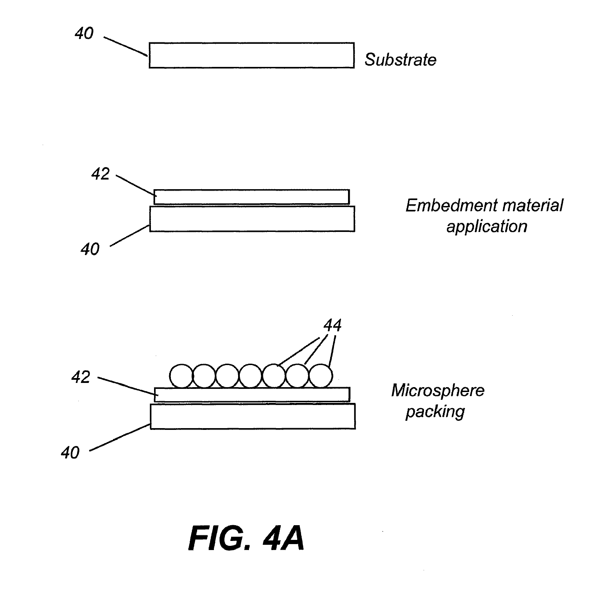

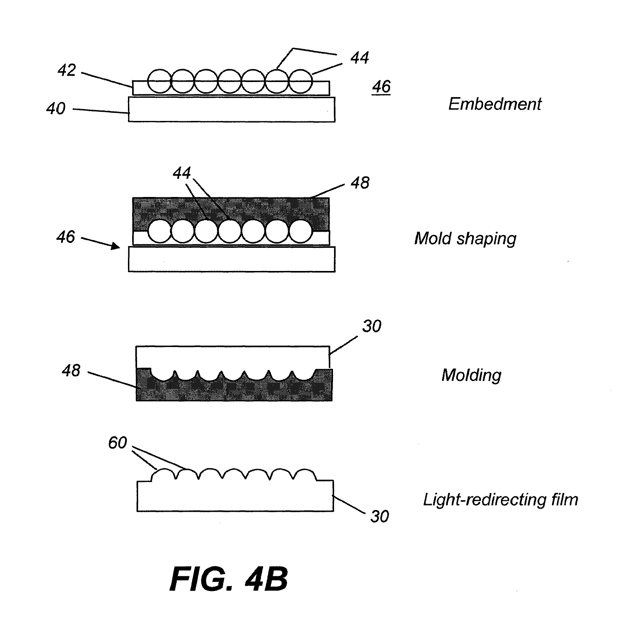

The block diagrams of Figures 4A and 4B show a fabrication sequence for forming light-redirecting film 30 in one embodiment. These figures show the succession of steps for first forming a structured template surface 46 that uses microspheres 44, forming a mold 48 using structured template surface 46, then replicating structured template surface 46 using the mold to form the featured surface of light-redirecting film 30. Examples given subsequently then give more detailed information on materials, concentrations, and treatments that are applied in specific cases.

Referring first to Figure 4A, a substrate 40 is provided for forming the template thereon. Substrate 40 can be a glass or plastic material, suitably selected for handling the subsequent processing conditions and materials used. The surface of substrate 40 is conditioned by applying a layer of an embedment material 42, such as an adhesive, thereon. In one embodiment, a thin coating of a thermally sensitive adhesive (TSA) is applied as embedment material 42. Microspheres 44 are then arranged on the surface of embedment material 42 using a technique termed Drying Assisted Self-Assembly (DASA), described in more detail subsequently.

Moving next to Figure 4B, an embedment process is carried out, embedding microspheres 44 to a suitable depth so that the exposed portion of each microsphere 44 that extends above the surface of the conditioned substrate is a hemisphere. In one embodiment, heat is used to provide embedment into a relatively viscous layer of embedment material 42. Other embodiments exert pressure against the exposed portions of microspheres 44 in order to provide embedment to the proper depth. A structured template surface 46 is formed by this embedment process.

With structured template surface 46 thus formed, mold 48 may then be fabricated. Uncured material for mold 48 is applied to template surface 46 and is then cured, using heat, radiation, chemical, or other curing methods. Mold 48 is then used in a conventional molding process for forming light-redirecting film 30 as a layer for binding to a substrate material or carrier or as a monolithic array of hemispheric lenslets 60.

Those skilled in the art of film fabrication can readily observe that the sequence of steps in Figures 4A and 4B admits a number of alternate embodiments, with each step capable of being executed with different techniques, under different conditions, and using different materials, including those described subsequently. In one alternate embodiment, an intermediate donor material is used for the step of assembling the hexagonally close-packed layer of microspheres 44. Once assembled, the HCP layer of microspheres is then transferred from the donor surface onto the conditioned surface of substrate 40. For this alternate embodiment, some amount of pressure or combination of heat and pressure is used to embed microspheres 44 halfway into the surface of embedment material 42. Halfway (embedment) of the microspheres is defined herein as embedment such that from the exposed apex height of the microspheres to the surface of the embedment layer is between 40 to 60 percent of the diameter of the microspheres. In other words, the microspheres are embedded to the extent that only 40 to 60 percent of the diameter of the microspheres is exposed above the surface of the embedment layer. Preferably, the halfway embedment is between 45 to 55 percent of the diameter of the microspheres.

## Drying Assisted Self-Assembly

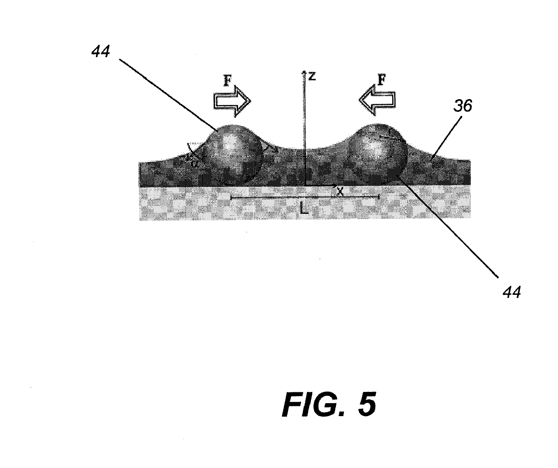

As was described with reference to Figure 4A, Drying Assisted Self-Assembly (DASA) is used for obtaining close-packing of spheres in embodiments of the present invention. In this process, a liquid suspension of very uniform (mono-disperse) microspheres that is applied onto a suitably conditioned surface self-assembles into a close-packed monolayer upon evaporation of the liquid during drying. As shown schematically in Figure 5, drying-assisted self-assembly utilizes attractive capillary forces that develop between microspheres 44 that are partially immersed in a liquid layer 36. The capillary attraction is caused by deformation of the liquid surface and the induced asymmetry of the contact line at the surface of a microsphere 44 as the height of liquid layer 36 in the film recedes during drying. The force F of capillary attraction is directly proportional to the surface tension at the liquid-air or, more generally, liquid-gas interface. Additional details on drying assisted self-assembly of microspheres in a liquid may be found in Aizenberg et al. Physical Review Letters, volume 84, page 2997, March 2000.

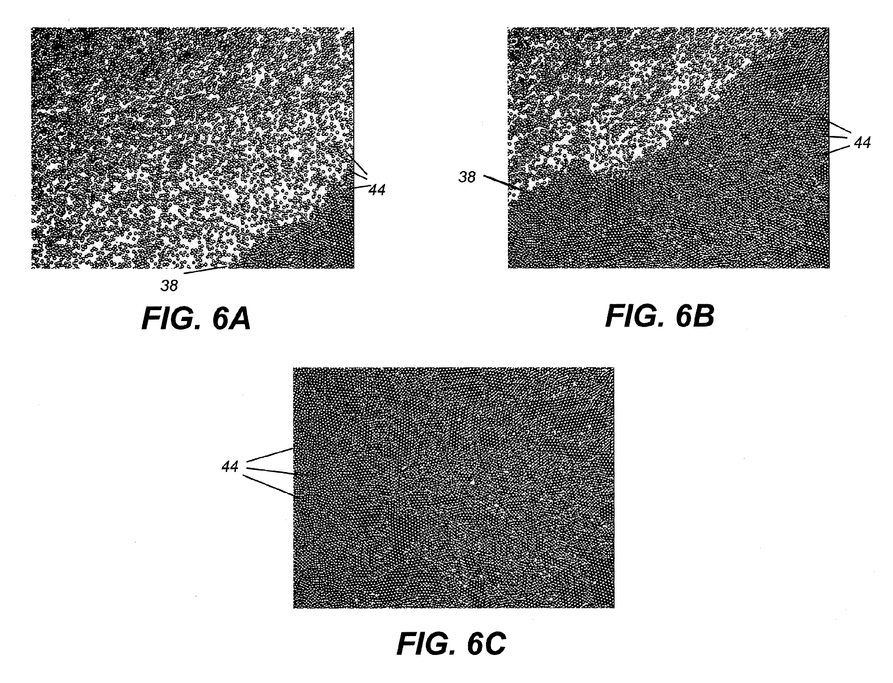

The sequence of top views shown in Figures 6A, 6B, and 6C shows early, intermediate, and later stages, respectively, in the progressive DASA process as it occurs. As liquid layer 36 (Figure 5) dries, microspheres 44 self-assemble against each other into a close-packing arrangement. This process can be observed on a microscopic scale. As drying progresses, an arrangement of two-dimensional crystalline regions is formed, with growth fronts 38 spreading along the surface where close-packing is actively taking place.

Advantageously, the DASA process does not achieve hexagonal close-packing with a uniform, ordered close-packing orientation direction over a broad area, but produces smaller neighboring regions or domains of close-packed spheres, each of whose close-packing orientation direction along the plane typically differs at least slightly from that of its neighbors, producing a two-dimensional crystalline structure with a suitable degree of random ordering or disorientation for minimizing moire problems. At the same time, because of the localized close-packing, fill factor is improved.

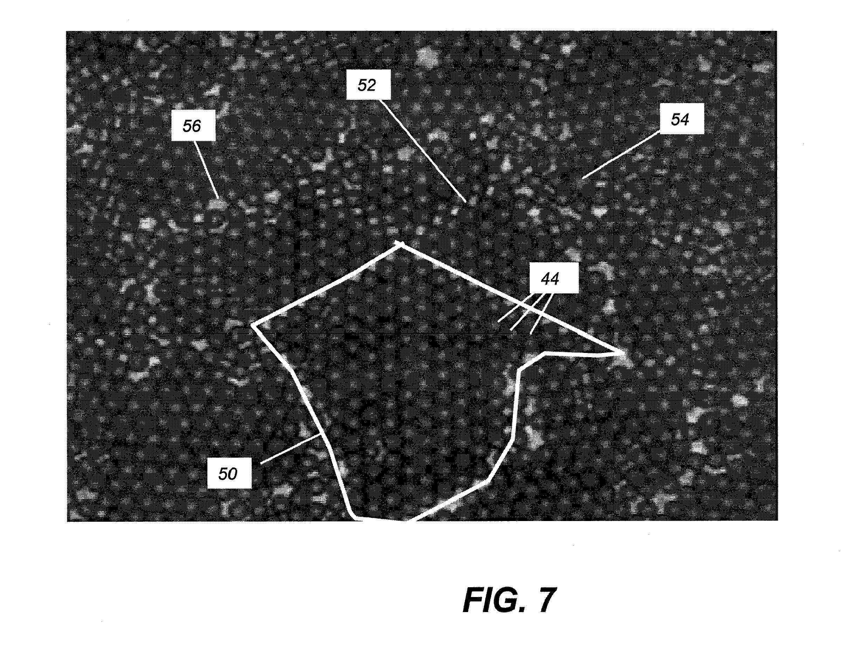

The plan view of Figure 7 shows hexagonal close-packing of microspheres in practice, according to one embodiment of the present invention. Figure 7 shows the clustering of microspheres 44 in irregularly shaped, multi-sphere, localized 2-D crystalline domains 50, wherein the close-packed domains 50 have respectively random orientation directions or, using terminology familiar to those skilled in the study of crystalline structures, are considered to be "disordered" or of "disordered orientation" relative to each other. Figure 7 highlights one of the crystalline domains 50 visible in this magnified view. A number of observations can be made from the example of Figure 7, including:

    (i) Within domain 50, microspheres 44 substantially have a 2-D HCP ordering. There can be some deviation from perfect 2-D HCP ordering within a domain.
    (ii) Grain boundaries 52 lie along the interface of neighboring 2-D crystalline domains 50 where close-packing is imperfect, due to relative disorientation of neighboring two-dimensional crystalline domains 50 and to other irregularities.

(iii) Bead size impurities 54, due primarily to imperfect microsphere fabrication or broken bead structures, and vacancies 56 can also occur, as seen in Figure 7.

(iv) The crystalline orientation of any domain 50 can differ from that of its neighboring domains 50. That is, any two different domains have close-packing orientation directions that are relatively independent. This can mean rows of microspheres 44 line up in different directions between two domains 50. Even where microspheres 44 in one domain 50 are arranged in rows that are parallel to rows of microspheres 44 in a neighboring domain 50, there can be some offset, so that the two parallel rows are slightly out of line with respect to each other, for example.

The close-packed arrangement shown in Figure 7 provides a type of colloidal crystal packing structure localized over each domain 50 in a single plane. Because of this, the DASA process enhances the fill factor over conventional dip-coating methods.

Embedment

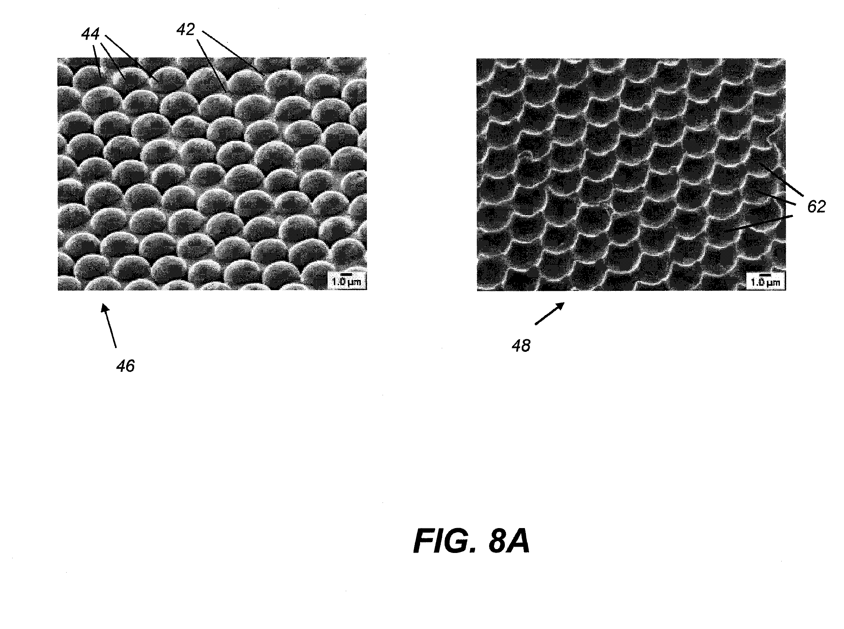

Figure 8A shows the results of embedment of polymer microspheres 44 that have been arranged using drying-assisted self-assembly in one embodiment. Referring back to the sequence of steps shown in Figure 4B, embedment of microspheres 44 into the surface of layer of embedment material 42 at the proper depth provides the array of hemispheric structures needed to form structured template surface 46.

There are a number of factors that can be controlled in order to provide embedment of microspheres 44 to the proper depth. One method applies heat over a sufficient time interval in order to properly lower the viscosity or modulus of embedment material 42 so that microspheres 44 more readily sink halfway into the surface. External pressure may also be applied for this purpose, as noted earlier. Solvents may also be used, as well as any combination of heat, pressure, and solvent, for example.

Casting Mold 48 from Template 46

Steps for forming forming mold 48, as shown in Figure 8A, from structured template surface 46 are well known in the film fabrication arts and can use a variety of materials and techniques for forming cavities 62. In one embodiment, for example, a layer of PDMS (polydimethylsiloxane) is applied onto template 46 for forming mold 48. Because microspheres 44 are embedded to the proper depth to form hemispherical structures, the mold material can be applied directly onto the surface of structured template surface 46, rather than being applied first to a substrate before impressing the shapes from template surface 46. However, in an alterate embodiment, a substrate is used for supporting the mold material.

Replication

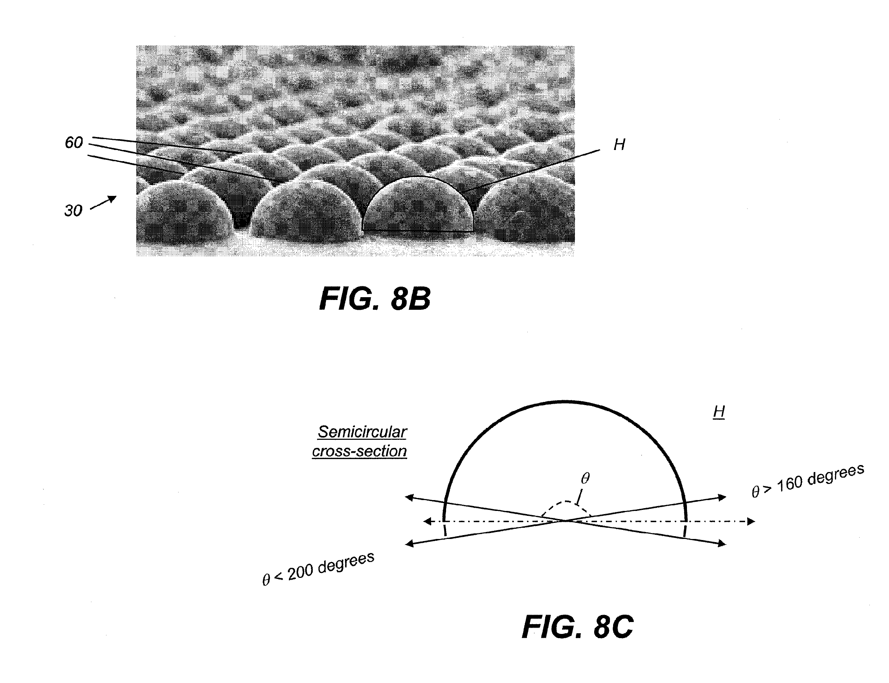

Referring back to Figure 4B, mold 48, formed from PDMS or other suitable polymer, then accepts the base material of light-redirecting film 30 and forms lenslets 60 to form a featured surface as shown in the example of Figure8B.

Lenslets 60 Semicircular in Cross-Section

An advantageous result of fabrication methods of the present invention relates to the final shape that is achieved for lenslets 60. Referring to Figure 8C, there is shown a cross-sectional shape H for any of lenslets 60, when the cross section is taken at a normal to the surface of light-redirecting film 30. As noted earlier and as represented in Figure 8C, the substantially semicircular shape is an arc subtended by an angle that is at least greater than 160 degrees and less than about 200 degrees, preferably greater than about 170 degrees and less than about 190 degrees, and most preferably as close to 180 degrees as possible.

In light-redirecting film 30 or other light-redirecting article fabricated according to the present invention, some imperfection of the featured surface is to be expected, due to the nature of the process and materials and due to the scale of lenslets 60 that are formed. In practice, however, more than half of the sectioned lenslets 60 meet these requirements for semicircular cross-section, meaning that the majority of lenslets 60 are thus hemispherical. It is also instructive to point out that, for light-redirecting film 30 having this structure, a cross section normal to the featured surface, taken at any angle that is in the plane of the surface, obtains semicircular cross-sections of some number of lenslets 60. That is, any cross section of a hemisphere that is taken normal to its base yields a semicircular shape of some size.

Fabrication Embodiments

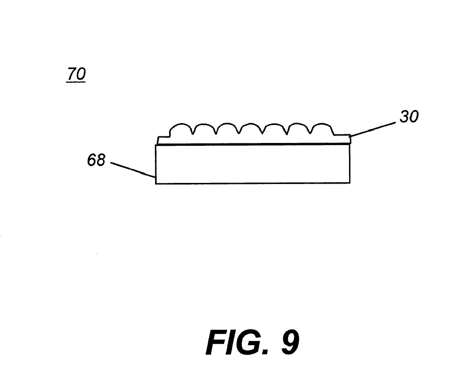

The sequence described earlier with reference to Figures 4A and 4B and shown in the examples of Figures 8A through 8C can be used to fabricate light-redirecting film 30 in a number of different ways. Figure 4B showed light-redirecting film 30 as a monolithic article. In other embodiments, as shown in the cross-section of a light-redirection article 70 in Figure 9, additional support is provided and light-redirecting film 30, having its featured surface already formed, is bonded to a substrate 68, such as a glass or polymer sheet, possibly provided as a web carrier, as described subsequently. Bonding between light-redirecting film 30 and substrate 68 can be performed in any of a number of ways and can include adhesive bonding or UV-activated bonding, for example. In yet other embodiments, a material that is to be molded can be applied to a substrate and the mold operation applied with the substrate as a backing support, which may or may not require subsequent removal.

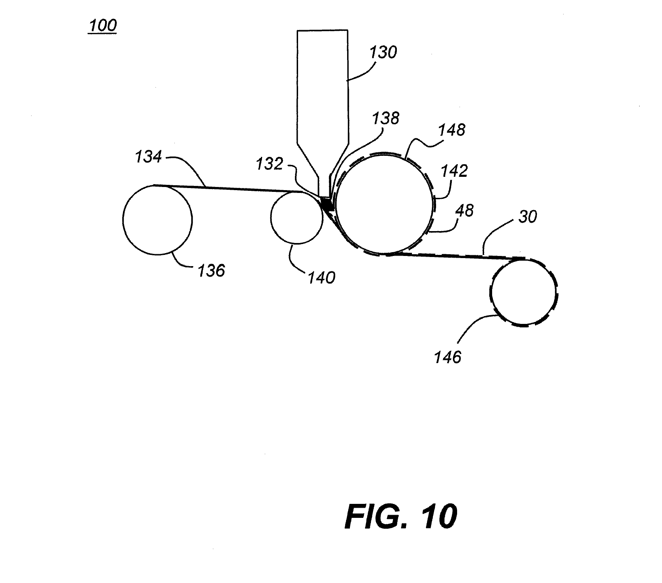

The schematic view of Figure 10 shows an extrusion roll molding apparatus 100 that can be used for fabricating light-redirecting film 30. In this embodiment, mold 48 (Figure 8A) is formed and wrapped onto a drum 148 to form a patterned roller 142. To fabricate the film, an extruder 130 provides an uncured thermoplastic material 132, such as a polymer, onto a base 134, fed from a supply 136. Base 134 can be formed from the same material that is used for thermoplastic material 132 or can be formed from other sheet materials such as papers, films, or fabrics, for example. Molten thermoplastic material 132 and base 134 pass into a nip area 138 between a support 140, such as a pressure roller, and patterned roller 142. As thermoplastic material 132 passes through nip area 138, support 140 and patterned roller 142 press the thermoplastic material 132 onto base 134, and the pattern that is on the roller is impressed into the resulting film 30. The impressed pattern is a negative of the surface of patterned roller 142. Thermoplastic material 132 is then cooled below its melting temperature, or is otherwise cured, and the light-redirecting film 30 is then wound onto a substrate take up roll 146 for further processing. Base 134 may be removable, for example.

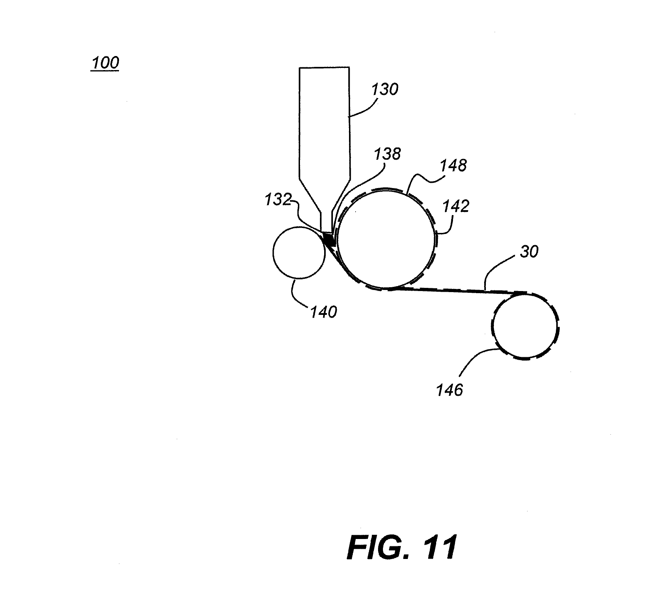

The alternate extrusion roll molding embodiment of Figure 11 forms light-redirecting film 30 by extruding uncured thermoplastic material 132 without using a base or carrier material. Extruder 130 melts thermoplastic material 132 and supplies it to nip area 138 between support 140 and patterned roller 142. This forms light-redirecting film 30 as it cools, with the pattern that is on the roller surface impressed into the surface of light-redirecting film 30 to form its featured surface. The patterned and cooled light-redirecting film 30 is then wound onto a substrate take up roll 146 for further processing.

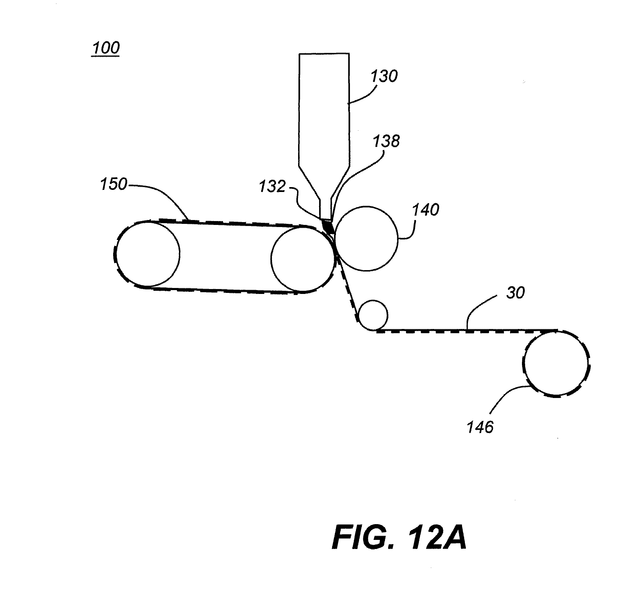

Figure 12A shows a schematic diagram of an alternate type of molding apparatus 100 that uses a patterned belt 150. Patterned belt 150 is itself formed using patterned roll fabrication as described with reference to Figures 10 and 11. In terms of its patterned structure, then, patterned belt 150 bears the imprint of a master patterned roller 142, serving as what is conventionally termed the "female" molding element. To form light-redirecting film 30, uncured thermoplastic material 132 is fed to nip area 138 between patterned belt 150 and support 140. With this arrangement, the surface pattern that is formed on light-redirecting film 30 is the same pattern as that of the patterned roller 142 surface of the Figure 10 and 11 embodiments.

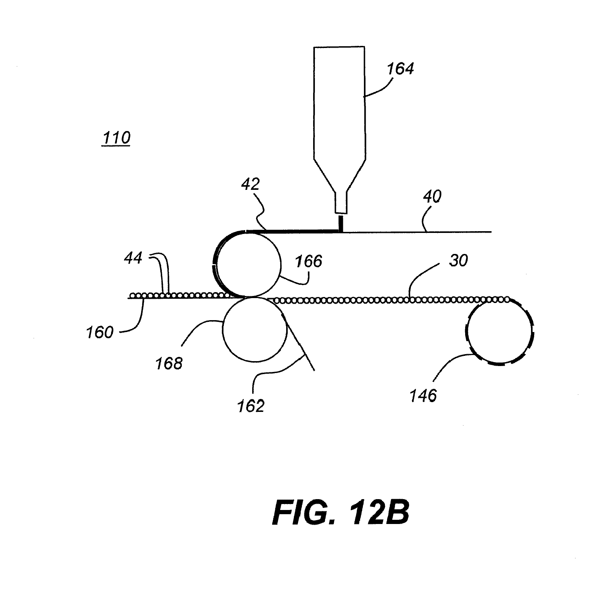

Figure 12B shows an alternate embodiment of a fabrication apparatus 110 that uses a donor material 160. Microspheres 44 are assembled onto donor material 160 in hexagonally close-packed arrangement, using DASA as described earlier. The surface of substrate 40 is conditioned by application of embedment material 42 from a coater 164. Donor material 160 and conditioned substrate 40 are fed into a nip between rollers 166 and 168 that apply pressure in order to embed microspheres 44 halfway into the surface of embedment material 42 and thus form light-redirecting film 30. Spent donor 162 is then discarded.

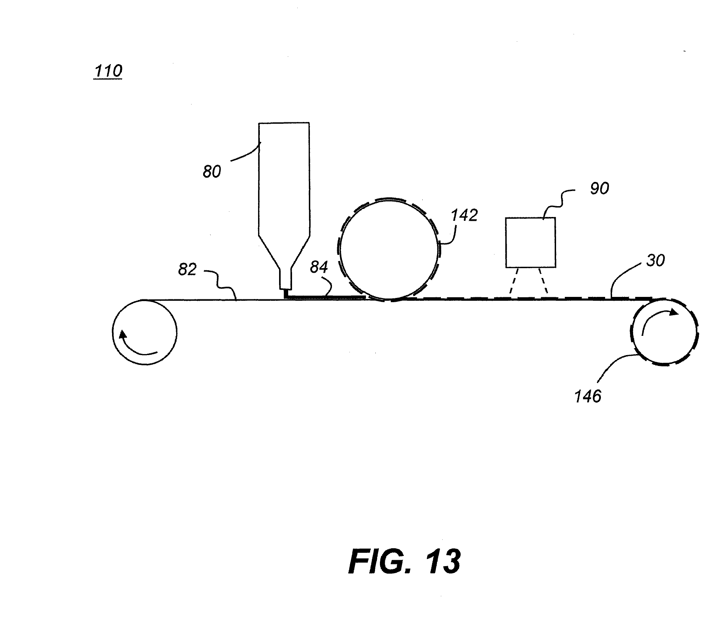

Figure 13 shows, in schematic form, fabrication apparatus 110 using UV curing for manufacture of LGF 20. A coater 80 applies a layer of uncured material 84 to a carrier 82 or other support. Patterning can then be performed by impressing the uncured material using patterned roller 142. Following this, UV radiation 90 is used to promote curing of the applied layer so that it hardens with its impressed pattern, forming light-redirecting film 30 that is then wound onto roll 146. Light-redirecting film 30 may include or may discard the carrier 82 portion. Other types of radiant energy could alternately be used.

Materials

Methods of the present invention allow the use of a range of different materials for each stage of the process. For example, microsphere beads useful in this invention may be formed of any suitable material, preferably plastic or glass, prepared in any manner suitable for obtaining the desired bead shape and size. Suitable methods can include suspension and emulsion polymerization methods such as the limited coalescence technique known to those skilled in the microsphere bead fabrication arts. This includes the "suspension polymerization" and "polymer suspension" techniques.

The beads useful in this invention may be prepared in any manner suitable for obtaining the desired bead shape. Suitable methods are suspension and emulsion polymerization methods such as the limited coalescence technique are known, as described, for example, by Thomas H. Whitesides and David S. Ross in Journal of Colloid Interface Science 169. 48-59 (1995).

The limited coalescence method includes the "suspension polymerization" technique and the "polymer suspension" technique. A preferred method of preparing polymer particles in accordance with this invention is by a limited coalescence technique where poly-addition polymerizable monomer or monomers are added to an aqueous medium containing a particulate suspending agent to form a discontinuous (oil droplet) phase in a continuous (water) phase. The mixture is subjected to shearing forces, by agitation, homogenization and the like, to reduce the size of the droplets. After shearing is stopped, an equilibrium is reached with respect to the size of the droplets as a result of the stabilizing action of the particulate suspending agent in coating the surface of the droplets. Polymerization is then completed to form an aqueous suspension of polymer particles.

In the "polymer suspension" technique, a suitable polymer is dissolved in a solvent and this solution is dispersed as fine water-immiscible liquid droplets in an aqueous solution that contains colloidal silica as a stabilizer. Equilibrium is reached and the size of the droplets is stabilized by the action of the colloidal silica coating the surface of the droplets. The solvent is removed from the droplets by evaporation or other suitable technique resulting in polymeric particles having a uniform coating thereon of colloidal silica. This conventional process is described, for example, in US. Pat. No. 4,833,060 issued May 23, 1989. In practicing this invention using the suspension polymerization technique, any suitable monomer or monomers may be employed such as, for example, styrene, vinyl toluene, p-chlorostyrene; vinyl naphthalene; ethylenically unsaturated monoolefins such as ethylene, propylene, butylene and isobutylene; vinyl halides such as vinyl chloride, vinyl bromide, vinyl fluoride, vinyl acetate, vinyl propionate, vinyl benzoate and vinyl butyrate; esters of alpha-methylene aliphatic monocarboxylic acids such as methyl acrylate, ethyl acrylate, n-butylacrylate, isobutyl acrylate, dodecyl acrylate, n-octyl acrylate, 2- chloroethyl acrylate, phenyl acrylate, methyl-alpha-chloroacrylate, methyl methacrylate, ethyl methacrylate and butyl methacrylate; acrylonitrile, methacrylonitrile, acrylamide, vinyl ethers such as vinyl methyl ether, vinyl isobutyl ether and vinyl ethyl ether; vinyl ketones such as vinyl methylketone, vinyl hexyl ketone and methyl isopropyl ketone; vinylidene halides such as vinylidene chloride and vinylidene chlorofluoride; and Nvinyl compounds such as N-vinyl pyrrole, N-vinyl carbazole, N-vinyl indole and N-vinyl pyrrolidone divinyl benzene, ethylene glycol dimethacrylate, mixtures thereof; and the like.

In the suspension polymerization technique, other addenda are added to the monomer droplets and to the aqueous phase of the mass in order to bring about the desired result including initiators, promoters and the like which are more particularly disclosed, for example, in U.S. Pat. Nos. 2,932,629 and 4,148,741. Useful solvents for the polymer suspension process are those that dissolve the polymer, which are immiscible with water and which are readily removed from the polymer droplets such as, for example, chloromethane, dichloromethane, ethylacetate, vinyl chloride, methyl ethyl ketone, trichloromethane, carbon tetrachloride, ethylene chloride, trichloroethane, toluene, xylene, cyclohexanone, 2-nitropropane and the like. A particularly useful solvent is dichloromethane because it is a good solvent for many polymers while at the same time, it is immiscible with water. Further, its volatility is such that it can be readily removed from the discontinuous phase droplets by evaporation.

The quantities of the various ingredients and their relationship to each other in the polymer suspension process can vary over wide ranges. However, it has generally been found that the ratio of the polymer to the solvent should vary in an amount of from about 1 to about 80% by weight of the combined weight of the polymer and the solvent and that the combined weight of the polymer and the solvent should vary with respect to the quantity of water employed in an amount of from about 25 to about 50% by weight. The size and quantity of the colloidal silica stabilizer depends upon the size of the particles of the colloidal silica and also upon the size of the polymer droplet particles desired. Thus, as the size of the polymer/solvent droplets are made smaller by high shear agitation, the quantity of solid colloidal stabilizer is varied to prevent uncontrolled coalescence of the droplets and to achieve uniform size and narrow size distribution of the polymer particles that result. These techniques provide particles having a predetermined average diameter anywhere within the range of from 0.5 micrometer to about 150 micrometers with a very narrow size distribution. The coefficient of variation (ratio of the standard deviation to the average diameter) is normally below about 0.35. The particular polymer employed to make the beads is a water-immiscible synthetic polymer that may be colored. The preferred polymer is any amorphous water immiscible synthetic polymer. Examples of polymer types that are useful are polystyrene, poly(methyl methacrylate) or poly(butyl acrylate). Copolymers such as a copolymer of styrene and butyl acrylate may also be used. Polystyrene polymers are conveniently used.

The distribution of microsphere sizes is such that the coefficient of variation (cv), defined as the standard deviation of the distribution divided by the arithmetic mean, is less than 0.35, preferably less than 0.2 and most preferably less than 0.15.

Light-redirecting film 30 can be formed from any suitable transparent material, taking factors and characteristics such as index of refraction, glass transition temperature, rigidity, and other factors into account, for example. A typical light re-directing film comprises a sheet with a featured surface having a close-packed monolayer of micro-hemispheres. The sheet may include a substrate. A range of different substrates can be used for forming structured template surface 46, including glass and polymers. The substrate can be a polymeric material such as Kodak Estar film base formed of polyester plastic and having a thickness of between 20 and 200 microns. For example, the substrate can be an 80 micron thick sheet of transparent polyester. Other polymers, such as transparent polycarbonate, can also be used.

The flexible plastic substrate can be any flexible, self-supporting plastic film. The flexible plastic substrate must have sufficient thickness and mechanical integrity so as to be self-supporting, yet should not be so thick as to be rigid. Typically, the flexible plastic substrate is the thickest layer of the composite film in thickness. Consequently, the substrate determines to a large extent the mechanical and thermal stability of the fully structured composite film.

Another significant characteristic of the flexible plastic substrate material is its glass transition temperature (Tg). Tg is defined as the temperature at which plastic material changes from the glassy state to the rubbery state. The effective Tg may comprise a range before the material may actually flow. Suitable materials for the flexible plastic substrate include thermoplastics of a relatively low glass transition temperature, for example up to 150˚ C, as well as materials of a higher glass transition temperature, for example, above 150˚ C.

The choice of material for the flexible plastic substrate would depend on factors such as manufacturing process conditions, including deposition temperature and annealing temperature, for example, as well as on post manufacturing conditions such as in a process line of a display manufacturer. Certain of the plastic substrates described herein can withstand higher processing temperatures of up to at least about 200˚ C, some up to 300-350˚ C, without damage. Typically, the flexible plastic substrate is polyethylene terephthalate (PET), polyethylene naphthalate (PEN), polyethersulfone (PES), polycarbonate (PC), polysulfone, a phenolic resin, an epoxy resin, polyester, polyimide, polyetherester, polyetheramide, cellulose acetate, aliphatic polyurethanes, polyacrylonitrile, polytetrafluoroethylenes, polyvinylidene fluorides, poly(methyl (x-methacrylates), an aliphatic or cyclic polyolefin, polyarylate (PAR), polyetherimide (PEI), polyethersulphone (PES), polyimide (PI), Teflon poly(perfluoro-alboxy) fluoropolymer (PFA), poly(ether ether ketone) (PEEK), poly(ether ketone) (PEK), poly(ethylene tetrafluoroethylene) fluoropolymer (PETFE), and poly(methyl methacrylate) and various acrylate/methacrylate copolymers (PMMA). Aliphatic polyolefins may include high density polyethylene (HDPE), low density polyethylene (LDPE), and polypropylene, including oriented polypropylene (OPP). Cyclic polyolefins may include poly(bis(cyclopentadiene)). A preferred flexible plastic substrate is a cyclic polyolefin or a polyester. Various cyclic polyolefins are suitable for the flexible plastic substrate. Examples include Arton® made by Japan Synthetic Rubber Co., Tokyo, Japan, Zeanor T made by Zeon Chemicals L.P., Tokyo Japan, and Topas® made by Celanese A. G., Kronberg Germany. Arton is a poly(bis(cyclopentadiene)) condensate that is a film of a polymer. Alternatively, the flexible plastic substrate can be a polyester. A preferred polyester is an aromatic polyester such as Arylite.

Embedment material 42 can be formed from a number of different substances, including materials that are not narrowly classed as "adhesives". For example, a material that is sufficiently soft, such as a pressure sensitive adhesive or incompletely polymerized or crosslinked monomer or oligomer or a material that is capable of being softened by the application of heat to allow embedment ofmicrospheres halfway into the surface of the layer, such as a thermoplastic, can be used. Embedment can be caused by pushing or pressing the microspheres into the embedment material or by the action of surface forces that draw the microspheres into the embedment material to the desired depth. Suitable embedment materials include (meth)acrylate homopolymers and copolymers, polyolefins, polyvinyl acetate, polyvinyl butyrals, polyurethanes, polyesters, UV curable acrylics and epoxies, polycarbonates, and other related materials. Polyolefins may include high or low density polyethylene, ethylene copolymers containing (meth) acrylates, ethylene copolymers containing (meth)acrylic acid or its salts, ethylene copolymers containing vinyl acetate, polypropylenes, and cyclic polyolefins. Particularly suitable embedment materials include low density polyethylene and polyvinyl butyrals.

A number of wetting agents can be used to facilitate DASA processing. The wetting agent or coating aid may be any such surfactant which is compatible in the microsphere coating solution. It is preferred that the surfactant used reduces the surface tension of the solution to about 30 dyne/cm or less so that the coated solution spreads evenly onto the substrate or embedment material surface. The surfactant may be nonionic, anionic, or cationic in nature as long as it is compatible with the other ingredients in the coating solution. Examples of useful nonionic surfactants include, polyalkyleneoxide modified polydimethylsiloxane (trade name "Silwet L-7607", available from Momentive Performance Materials, trade name Q2-5211 available from Dow Coming Corp.), perfluoroalkyl poly(ethylene oxide) alcohol (trade name "Zonyl FSN", available from Dupont Co.), poly(ethylene oxide)-poly (propylene oxide) and poly(ethylene oxide) di-ol compound (trade name "Pluronic L-44", available from BASF Corp.), and nonylphenoxy poly(hydroxypropylene oxide (8-10)) alcohol (trade name "Surfactant 10G", available from Olin Corporation).

Particularly useful are nonionic polyethoxylated surfactants, particularly hydrocarbon polyethoxylated surfactants and polyethoxylated silicon surfactants. Preferred are nonionic hydrocarbon polyethoxylated surfactants having the general formula

$$R_1\text{-}B_x - E_m -D$$

wherein $R_1$ is an alkyl group with 8-20 carbons, B is a phenyl group and x is 0 or 1, E is $(OCH_2 CH_2)$ and m is 6-20, and D is OH or $OCH_3$. Examples of useful nonionic surfactants described by this general formula include octylphenoxypoly (ethyleneoxide) (9) ethanol (trade name "Triton X-100", available from Dow Chemical Co.), octylphenoxypolyethyleneoxide (12) ethanol (trade name "Triton X-102", available from Dow Chemical Co.), octylphenoxypolyethyleneoxide (30-40) ethanol (trade name "Triton X-405", available from Dow Chemical Co.), alkyl $(C_{12}\text{-}C_{15}$ mixture) polyethyleneoxide (7) alcohol (trade name "Neodol 25-7", available from Shell Chemical Co.), and tridecylpolyethyleneoxide (12) alcohol (trade name "Renex 30", available from ICI). Nonionic surfactants of particular value are polyalkyleneoxide modified poly (dimethylsiloxane)s.

In one embodiment, the anionic surfactant is a sulfate or sulfonate surfactant having the general formula $R_2\text{-}(A)\text{-}C$, wherein $R_2$ is an alkyl group with 8-20 carbons and more preferably 10-16 carbons, A is an aryl or a hydroxy ethylene group, and C is $SO_3 - M^+$ or $SO_4^- M^+$ wherein $M^+$ is ammonium or an alkali metal such as $K^+$, $Na^+$, $Li^+$. Most preferably the anionic surfactant is sodium dodecylbenzenesulfonate (trade name "Siponate DS-10", available from Rhone-Poulenc).

In another embodiment, the anionic sulfate or sulfonate surfactants have the general formula $(R_3)_n$-$(B)_x$-$(E)_y$-C, wherein $R_3$ is an alkyl group with 4-20 carbons and more preferably 4-16 carbons, n is 1 when x is 0, and n is 1, 2, or 3 when x is 1, B is a phenyl group and x is 0 or 1, E is --$(OCH_2CH_2)$--and y is an integer from 1 to 8, and C is $SO_3^- M^+$ or $SO_4^- M^+$ wherein $M^+$ is ammonium or an alkali metal such as $K^+$, $Na^+$, and $Li^+$. Most preferably the anionic sulfate or sulfonate surfactant is sodium tributylphenoxypolyethoxysulfate (trade name Hostapal BV, available from Hoechst Celanese), or sodium alkyl($C_{12}$-$C_{15}$)polyethoxy(5)sulfate (trade name Witcolate SE-5, available from Witco). In preferred embodiments, the surfactant has a working concentration in the range from approximately $0.1 mg/m^2$ to $100.0 mg/m^2$ and more preferably in the range from about $1 mg/m^2$ to $10 mg/m^2$.

A number of binders can be used to facilitate DASA processing. Suitable hydrophilic binders include both naturally occurring substances such as proteins, protein derivatives, cellulose derivatives (for example cellulose esters), gelatins, gelatin derivatives, polysaccharides, casein, and synthetic water permeable colloids such as poly (vinyl lactams), acrylamide polymers, latex, poly (vinyl alcohol) and its derivatives, hydrolyzed polyvinyl acetates, polymers of alkyl and sulfoalkyl acrylates, and methacrylates, polyamides, polyvinyl pyridine, acrylic acid polymers, maleic anhydride copolymers, vinyl amine copolymers, methacrylic acid copolymers, acryloyloxyalkyl acrylate and methacrylates, vinyl imidazole copolymers, vinyl sulfide copolymers, and homopolymers or copolymers containing styrene sulfonic acid, water-dispersible polyester ionomers, particularly water-dispersible polyester ionomers containing an aromatic dicarboxylic acid moiety, an aliphatic or cycloaliphatic glycol residue and hydroxy end groups. Particularly advantaged are polymers having a glass transition temperature less than 80° C. Particularly suitable are water-dispersible polyester ionomer binders that in the dry form have a glass transition temperature less than 80° C, preferably less than 50° C, most preferably less than 30° C.

Example 1

The following example shows how each of the steps given in Figures 4A and 4B are performed in one embodiment:

1. Substrate conditioning. A thermally sensitive adhesive (TSA) material (Estane 5703; softening point 85°C) is coated on a substrate of polyethyleneterephthalate (PET) to provide a dry thickness of 7 μm. This is accomplished by preparing an 8.3wt% solution of Estane 5703 containing 1wt% of the fluorocarbon surfactant FC431 from 3M (based on the weight of Estane) in tetrahydrofuran (THF) and applying it at a wet coverage of $101.6 cm^3/m^2$ to a 0.1 mm thick sheet of polyethyleneterephthalate (PET).

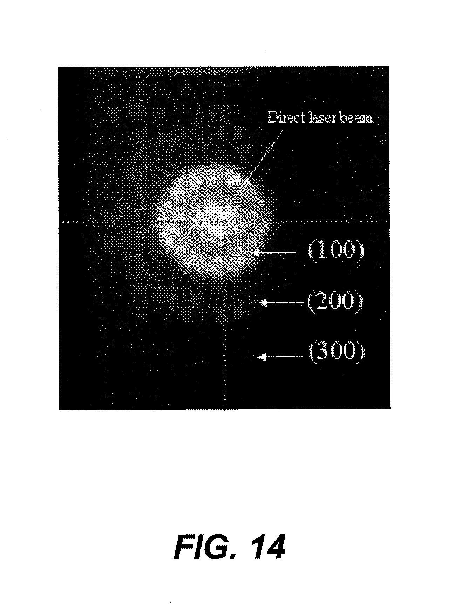

2. Microsphere deposition and DASA self-packing. An aqueous suspension containing 9.8wt% polystyrene microspheres (3.4 μm mean diameter and coefficient of variation (cv) of 0.3), fish skin gelatin and Olin 10G surfactant is applied over the TSA layer at a wet coverage of $21.5 cm^3/m^2$. The coating is then dried at 30°C to provide a dried layer containing $2g/m^2$ microspheres, $41mg/m^2$ gelatin and $20mg/m^2$ surfactant. The dry coverage of microspheres in the coating is calculated to provide a uniform mono-layer based on the size of the individual microspheres. Examination of the coating using an optical microscope shows a close-packed mono-layer of polymer microspheres created by the process of drying assisted self-assembly on the surface of the TSA layer. When the coating is placed in front of a laser beam, a diffraction pattern of concentric rings is observed on a screen behind the sample, as shown in Figure 14.

3. Embedment. In one embodiment, the coating is passed four times through a set of steel rollers maintained at a temperature close to 85° C and set to provide a nip pressure of 20psi. The process embeds the microspheres into the TSA layer to a depth close to half of their diameter.

4. Mold shaping and curing. The coating with embedded microspheres is cooled to 22° C and a composition containing 10 parts by weight Sylgard 184 elastomer and 1 part by weight curing agent is applied over it at a thickness of 3.8mm. The sample is placed in an oven set at 100° C for 1 hour to cure the elastomer. The cured elastomer film containing a negative replica of the embedded microsphere coating is then peeled off.

5. Molding of light-redirecting film 30. The cured elastomer film is placed on a glass sheet and a 0.2mm thick layer of UV curable optical adhesive NOA-68 from Norland Products is coated over the micro-voided surface. The composite material is then exposed to 1.0 Joule of H-bulb UV radiation to cure the optical adhesive. The cured optical adhesive is peeled off to create a monolithic replica of the original close-packed mono-layer embedded microsphere coating of step 2.

Light-redirecting film 30 of the present invention provides an improved fill factor when compared against conventional lenslet arrays that provide lenslets of 20 micron diameter or less. Fill factors of better than 80% are achievable using this method. This compares favorably against existing light-redirection articles using lenslet arrays that currently achieve no better than about 70% fill factor.

Example 2

The following is an example of steps in an alternate embodiment of the invention.

1. Substrate conditioning. A 20 $\mu$m thick TSA layer comprising low density polyethylene (LDPE) is extrusion coated onto a 100 $\mu$m thick substrate of PET.
2. Microsphere deposition and DASA self-packing. An aqueous suspension of poly (methylmethacrylate) (PMMA) microspheres (30 wt%) with mean size close to 10$\mu$m and cv < 0.1 containing 3 wt% of a polyalkyleneoxide modified polydimethylsiloxane surfactant from Dow Coming is applied onto the TSA layer to give a dry coverage close to 6.4 g/m$^2$ of microspheres. Examination of the coating using an optical microscope shows a mono-layer comprising a mosaic of 2D HCP domains.
3. Embedment. Embedment of the close-packed array of microspheres to create a close-packed micro-hemisphere array is accomplished by simply heating original in an oven set at 125˚ C for 2min.
4. Mold shaping and curing. The coating with embedded microspheres is cooled to 22˚ C and a composition containing 10 parts by weight Sylgard 184 elastomer and 1 part by weight curing agent is applied over it at a thickness of 3.8mm. The sample is placed in an oven set at 100˚ C for 1 hour to cure the elastomer. The cured elastomer film containing a negative replica of the embedded microsphere coating is then peeled off.
5. Molding of light re-directing film 30. The cured elastomer film containing the negative replica of the original micro-hemisphere array is placed on a sheet of PET. A 0.2mm thick layer of a mixture of 15wt% tetrahydrofurfuryl acrylate, 35wt% 1,6-hexanediol diacrylate and 50wt% polyurethane acrylate oligomer is coated over the film. The composite is then exposed to 0.3 joules of D-bulb UV radiation. The cured acrylate layer is then separated from the negative replica to create a monolithic positive replica of the original micro-hemisphere array.

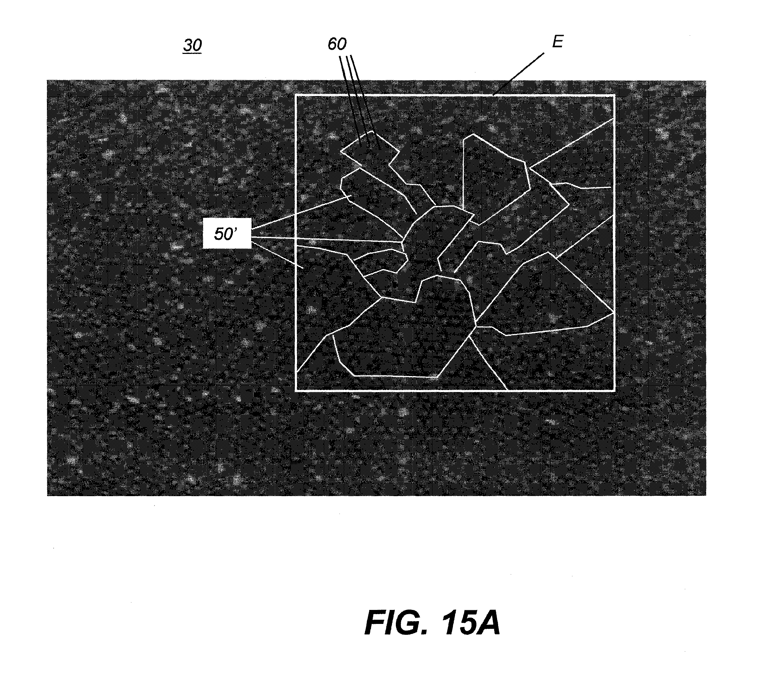

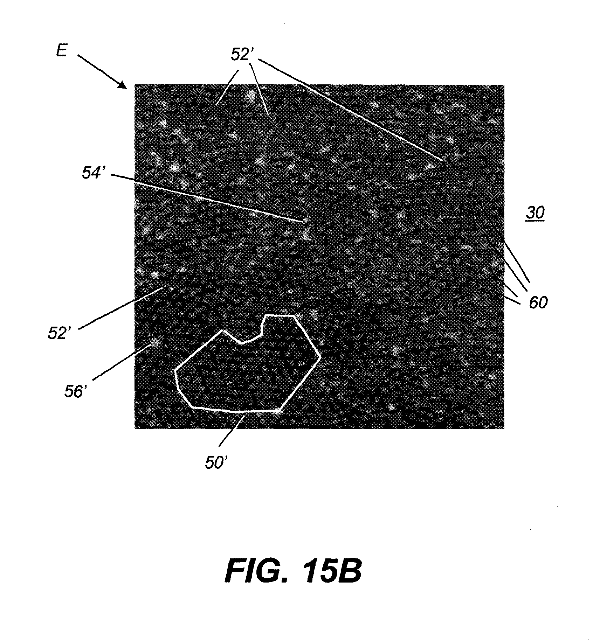

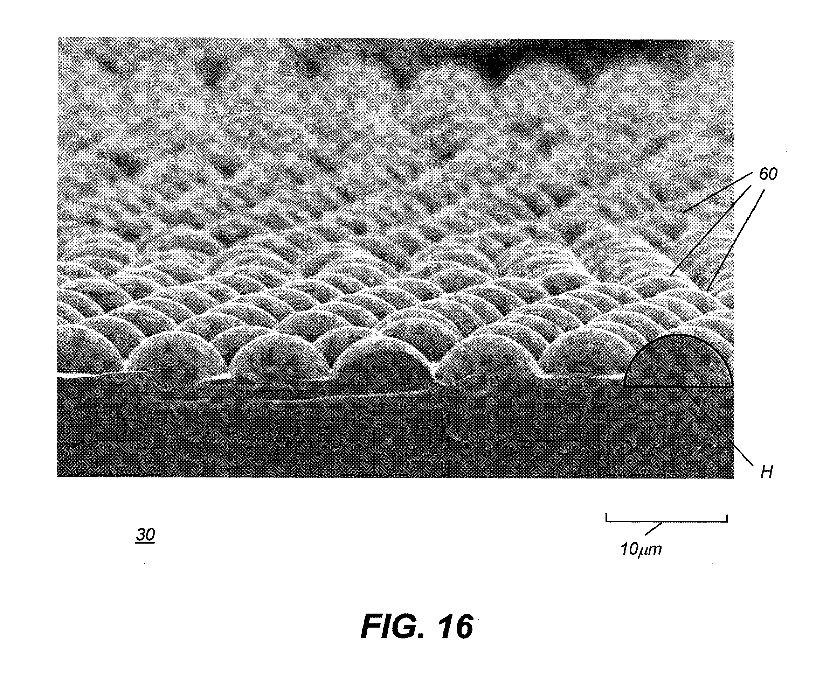

Figures 15A, 15B, and 16 are micrographs of the monolithic micro-hemisphere array fabricated according to the process given as Example 2. Figure 15A shows a section of light-redirecting film having a number of domains 50' of close-packed lenslets 60, within domains 50' that are relatively disordered with respect to each other. A representative number of domains 50' are traced in section E of Figure 15A; perfect structuring within domains 50' is not considered to be advantageous, nor is alignment of close-packing orientation directions between domains, due to image frequency patterning considerations described earlier. The enlarged view of section E in Figure 15B shows the structure of surface features in more detail, with grain boundaries 52', vacancies 56', and size impurities 54'. The parallel between the surface of light-redirecting film 30 and the original template that used a close-packed array of spheres, as was described earlier with reference to Figure 7, can be seen by a structural comparison of hemispherical lenslets 60, domains 50', grain boundaries 52', size impurities 54', and vacancies 56' in Figures 15A and 15B with corresponding microspheres 44, domains 50, grain boundaries 52, size impurities 54, and vacancies 56 in Figure 7. The close-packing orientation directions of any two adjacent domains 50', as orientation direction is understood by those studied in crystalline structures, often differ.

Using the molding techniques described for Examples 1 and 2 enables a highly accurate replication of the mold surface, so that the distribution of hemispheric lenslet sizes on light-redirecting film 30 has a coefficient of variation (cv) that is less than 0.35, preferably less than 0.2 and most preferably less than 0.15.

Figure 16 is a perspective view of a sectioned portion of light-redirecting film 30 showing hemispheric lenslets 60 along its featured surface. Using the fabrication methods of the present invention, a cross-section taken at a normal to the surface of light-redirecting film 30, taken along any direction in the plane of the surface, has a semicircular shape.

In the embodiments previously described with reference to Figures 4A and 4B and given in Examples 1 and 2, a molding process of some kind is performed that replicates structured template surface 46 in order to fabricate light redirecting film 30. It should be noted that an alternate embodiment uses structured template surface 46 itself as a light-redirection article. That is, the structure formed by embedding microspheres 44 into embedment material 42, as described with reference to Figure 4B, can itself be used for redirecting light in various applications. Thus, in one embodiment, for example, microspheres 44 are transparent and are index-matched with embedment material 42. Structured template 46 may be bonded to substrate 40 or may be usable separately, such as by curing embedment material 42.

Referring back to Figure 1, light-redirecting film 30 of the present invention can be used as light redirection article 20 for display apparatus 10. Because the method of the present invention provides a light-redirecting article that has enhanced fill factor and is capable of achieving improved brightness over conventional light-redirection films, there may be display applications for which only a single sheet of light-redirecting film is needed between light source 14 and LCD panel 12, instead of the two or more light-redirection articles typically required for conventional displays and represented in the block diagram of Figure 1. In addition to its use for redirecting light in backlit displays, the light-redirecting article of the present invention can also be used in a number of different applications, such as to provide diffusion surfaces. Additional coatings could be provided, such as reflective or anti-reflection coatings, for example, and the light-redirecting film or other type of article can be used in combination with reflective surfaces or other components. This would enable the light-redirecting article to be used in retroreflector applications, for example.

The invention has been described in detail with particular reference to certain preferred embodiments thereof, but it will be understood that variations and modifications can be effected within the scope of the invention as described above, and as noted in the appended claims, by a person of ordinary skill in the art without departing from the scope of the invention. For example, embedment of microspheres 44 half-way into the surface of embedment material 42 may use chemical solvents or other means for softening the material. DASA packing of microspheres can be performed on a separate donor sheet or other donor surface that is then used as an intermediate for providing the HCP pattern for embedment into embedment layer 42 (Figure 4B), after which the donor sheet can be removed. Thus, what is provided is a light-redirecting article formed as an array of hemispherical microlenses.

**Claims**

1. A method for forming a light-redirecting article comprising:

    a) conditioning a surface of a substrate by applying a layer of an embedment material;
    b) assembling a close-packed layer of microspheres using drying-assisted self-assembly and applying the close-packed layer of microspheres to the conditioned surface; and
    c) embedding the microspheres halfway into the surface of the layer of embedment material.

2. The method of claim 1 further comprising:

    d) forming a mold as a negative of the featured surface that is formed by embedding the microspheres halfway into the surface of the layer of embedment material in c); and
    e) replicating the featured surface onto a transparent medium using the mold to form the featured surface of a light-redirecting film.

3. The method of claim 1 wherein the microspheres are formed from glass or polymer.

4. The method of claim 1 wherein embedding the microspheres comprises applying one or more of heat, pressure, or a solvent to the conditioned surface of the substrate.

5. The method of claim 1 wherein assembling the close-packed layer of microspheres in b) comprises assembling the close-packed layer of microspheres onto a donor surface; and wherein applying the close-packed layer of microspheres to the conditioned surface in b) comprises transferring the close-packed layer of microspheres from the donor surface to the conditioned surface.

6. A light-redirecting article comprising:

    a featured surface comprising a plurality of two-dimensional domains of hexagonally close-packed hemispherical lenslets, wherein the coefficient of variation for hemispherical lenslet diameters is less than about 0.35,
    wherein at least two adjacent domains have different close-packing orientation directions and wherein grain boundaries delineate interfaces between neighboring domains;
    and wherein, taken in cross section at an angle normal to the featured surface, the shape of more than half of the sectioned lenslets in any domain is substantially semicircular.

7. The light-redirecting article of claim 6 wherein the coefficient of variation for hemispherical lenslet diameters is less than about 0.2.

8. The light-redirecting article of claim 6 further comprising a substrate supporting the featured surface.

9. A display apparatus comprising:

    a) a light source energizable for providing illumination over an area;
    b) a light-redirecting film in the path of the illumination for providing a conditioned illumination and comprising:

        a featured surface comprising a plurality of two-dimensional domains of hexagonally close-packed hemispherical lenslets, wherein the coefficient of variation for hemispherical lenslet diameters is less than about 0.35,
        wherein at least two adjacent domains have different close-packing orientation directions and wherein grain boundaries delineate interfaces between neighboring domains;
        and wherein, taken in cross section at an angle normal to the featured surface, the shape of more than half of the sectioned lenslets in any domain is substantially semicircular;

    and
    c) a display panel disposed to modulate the incident conditioned illumination from the light-re-

directing film for forming an image.

10. The display apparatus of claim 9 wherein the display panel is a liquid-crystal display panel.

**FIG. 1**

FIG. 2A

**FIG. 2B**

**FIG. 2C**

EP 2 136 226 A1

FIG. 3A

FIG. 3B

40 — Substrate

42 —
40 — Embedment material
application

44
42 —
40 — Microsphere
packing

# FIG. 4A

42

44

44

46 *Embedment*

40

44

48

46 → *Mold shaping*

30

48 → *Molding*

60

*Light-redirecting film*

30

# FIG. 4B

FIG. 5

*FIG. 6B*

*FIG. 6A*

*FIG. 6C*

*FIG. 7*

EP 2 136 226 A1

FIG. 8A

**FIG. 8B**

_Semicircular cross-section_

$H$

$\theta$

$\theta > 160$ degrees

$\theta < 200$ degrees

**FIG. 8C**

70

30

68

**FIG. 9**

FIG. 10

*100*

*130*

*138*  *148*

*132*  *142*

*30*

*140*

*146*

**FIG. 11**

EP 2 136 226 A1

EP 2 136 226 A1

**FIG. 12A**

**FIG. 12B**

EP 2 136 226 A1

**FIG. 13**

EP 2 136 226 A1

**FIG. 14**

**FIG. 15A**

**FIG. 15B**

EP 2 136 226 A1

**FIG. 16**

Europäisches
Patentamt
European
Patent Office
Office européen
des brevets

**EUROPEAN SEARCH REPORT**

Application Number

EP 09 15 5175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 887 388 A2 (ROHM & HAAS DENMARK FINANCE AS [DK]) 13 February 2008 (2008-02-13) | 1,3-4, 6-10 | INV. G02B6/00 G02B3/00 |
| Y | * the whole document * ----- | 2,5 | G02B5/02 G02F1/13357 F21V8/00 |
| Y | HIROSHI YABU, MASATSUGU SHIMOMURA: "Simple Fabrication of Micro Lens Arrays" LANGMUIR, vol. 21, 29 January 2005 (2005-01-29), pages 1709-1711, XP002550479 * the whole document * ----- | 2 | |
| Y | US 2006/003097 A1 (ANDRES RONALD P [US] ET AL) 5 January 2006 (2006-01-05) * paragraphs [0073] - [0077]; figures 6-9 * ----- | 5 | |
| A,D | H.J. NAM ET AL: "Close-Packed Hemispherical Microlens Array from Two-dimensional ordered Polymeric Microspheres" LANGMUIR, vol. 22, 22 July 2006 (2006-07-22), pages 7358-7363, XP002550480 * the whole document * ----- | 1-10 | TECHNICAL FIELDS SEARCHED (IPC) G02B G02F |

The present search report has been drawn up for all claims

| Place of search | Date of completion of the search | Examiner |
|---|---|---|
| Munich | 14 October 2009 | Wolf, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 15 5175

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2009

| Patent document cited in search report | | Publication date | Patent family member(s) | | Publication date |
|---|---|---|---|---|---|
| EP 1887388 | A2 | 13-02-2008 | CN 101201428 A | | 18-06-2008 |
| | | | JP 2008052273 A | | 06-03-2008 |
| | | | KR 20080014710 A | | 14-02-2008 |
| | | | US 2008037261 A1 | | 14-02-2008 |
| US 2006003097 | A1 | 05-01-2006 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4833060 A
- US 2932629 A
- US 4148741 A

**Non-patent literature cited in the description**

- Close-Packed Hemispherical Microlens Array from Two-Dimensional Ordered Polymeric Microspheres. *Langmuir,* 2006, vol. 22, 7358-7363
- **Aizenberg et al.** *Physical Review Letters,* March 2000, vol. 84, 2997
- **Thomas H. Whitesides ; David S. Ross.** *Journal of Colloid Interface Science,* 1995, vol. 169, 48-59